# EUROPÄISCHE PATENTANMELDUNG

(11) **EP 0 816 429 A2**
(43) Veröffentlichungstag der Anmeldung: **07.01.1998**
(21) Anmeldenummer: 97109990.8
(22) Anmeldetag: 19.06.1997
(51) Int. Cl.: C08L 51/08, C09D 151/08, C08F 283/02, C08F 283/04

(54) **Selbstvernetzende wässrige Dispersionen von Polyestern und Vinylpolymeren**

(30) Priorität: 27.06.1996 DE 19625774
(71) Anmelder: Vianova Resins GmbH, 55252 Mainz-Kastel (DE)
(72) Erfinder: Weinberger, Manfred, Dr., 8010 Graz (AT); Zöller, Joachim, Dr., Sant Just (Barcelona) (ES)

(57) **Zusammenfassung**

Selbstvernetzende wäßrige Polymerdispersionen enthaltend wasserverdünnbare Polyester mit einer Lösungsviskosität im Festharz von über 300 mPas, und Vinylpolymere mit wiederholenden Einheiten abgeleitet von Styrol und/oder dessen ein- oder mehrfach alkylierten Derivaten mit 1 bis 10 Kohlenstoffatomen je Alkylgruppe und/oder substituierten Styrolen; Hydroxyalkylestern der Acryl-, Methacryl-, Croton- oder Isocrotonsäure oder Bis(hydroxyalkylestern) einer α,β-olefinisch ungesättigten Dicarbonsäure; Vinylmonomeren mit einer Carbonylfunktion oder einem oder mehreren Vinylmonomeren mit einer Amino-, Hydrazid- oder Hydrazinfunktion; Alkylestern einer α,β-olefinisch ungesättigten Carbonsäure oder Dialkylestern einer α,β-olefinisch ungesättigten Dicarbonsäure; und anderen Vinylmonomeren, ausgewählt aus Vinylestern von linearen, verzweigten oder cyclischen aliphatischen Monocarbonsäuren mit 1 bis 20 Kohlenstoffatomen, Vinyläthern, Vinylhalogeniden und Nitrilen von α,β-olefinisch ungesättigten Carbonsäuren; und ein Vernetzungsmittel mit mindestens zwei mit Carbonylgruppen reaktiven Gruppen ausgewählt aus primären Aminogruppen, Hydrazin- und Hydrazidgruppen oder Vernetzungsmitteln mit mindestens zwei Carbonylgruppen, wobei die Vernetzungsmittel jeweils die zu den eingesetzten Vinylmonomeren komplementäre Funktionalität haben; und die Menge des Vernetzungsmittels so gewählt wird, daß die Stoffmenge der reaktiven Gruppen des Vernetzungsmittels 65 bis 130 % der Stoffmenge der reaktiven Gruppen der Wiederholungseinheiten im Polymer beträgt, und wobei das Vinylpolymer durch radikalisch initiierte Emulsionspolymerisation in Gegenwart einer wäßrigen Lösung oder Dispersion des Polyesters hergestellt wird.

## Beschreibung

Die Erfindung betrifft selbstvernetzende wäßrige Dispersionen von hydrophil modifizierten Polyestern und Vinylpolymeren, die durch Emulsionspolymerisation in Gegenwart von wäßrigen Lösungen oder Dispersionen dieser Polyester hergestellt werden. Die Vernetzung erfolgt durch Zugabe geeigneter mindestens difunktioneller Verbindungen, die Vernetzungsreaktion findet durch Umsetzung von Carbonylgruppen mit Amin-, Hydrazin- oder Hydrazidgruppen statt.

Wäßrige Dispersionen von linearen Polyestern und Vinylpolymeren sind beispielsweise aus der WO-A 94/01478 bekannt. Die damit hergestellten Beschichtungen weisen jedoch unzureichende Beständigkeit gegen die Einwirkung von Lösungsmitteln, Wasser, sowie wäßrigen Alkalien und Säuren auf.

Es bestand daher die Aufgabe, diese Bindemittel so zu modifizieren, daß die Beständigkeitseigenschaften insgesamt verbessert werden. Die Aufgabe wurde gelöst, indem in die Vinylpolymeren durch Einpolymerisieren geeigneter Monomerer oder polymeranaloge Umsetzung zusätzlich Carbonylgruppen oder Amin-, Hydrazin- oder Hydrazidgruppen eingeführt wurden. Der Dispersion wird ein Vernetzungsmittel zugefügt, das im Fall der Modifikation der Polymeren mit Carbonylgruppen mindestens zwei Amino-, Hydrazin- oder Hydrazidgruppen enthält, im anderen Fall mindestens zwei Carbonylgruppen.

Die Erfindung betrifft daher selbstvernetzende wäßrige Polymerdispersionen enthaltend Massenanteile im Festharz von
(A) ca. 10 bis ca. 90 %, bevorzugt ca. 35 bis ca. 87 %, besonders bevorzugt ca. 60 bis ca. 85 % eines wasserverdünnbaren Polyesters, dessen wiederkehrende Einheiten durch Carbonyloxybrücken verknüpft sind, wobei bis zu 80 % dieser Brücken durch Carbonamidbrücken ersetzt sein können, mit einer Lösungsviskosität Festharz (40 %ige Lösung des Festharzes in N-Methylpyrrolidon; 25 °C) von über 300 mPa·s, bevorzugt über 600 mPa·s, besonders bevorzugt über 900 mPa·s, und
(B) ca. 90 bis ca. 10 %, bevorzugt ca. 65 bis ca. 13 %, besonders bevorzugt ca. 40 bis ca. 15 % eines Vinylpolymeren mit den angegebenen Massenanteilen von wiederholenden Einheiten abgeleitet von
   (B1) 0 bis ca. 90 %, bevorzugt 10 bis 80 %, Styrol und/oder dessen ein- oder mehrfach alkylierten Derivaten mit 1 bis 10 Kohlenstoffatomen je Alkylgruppe und/oder substituierten Styrolen ausgewählt aus Hydroxystyrol und Halogenstyrolen wie Chlor-, Cyan- und Bromstyrol,
   (B2) 0 bis ca. 60 %, bevorzugt 10 bis 50 %, einem oder mehreren Hydroxyalkylestern der Acryl-, Methacryl-, Croton- oder Isocrotonsäure oder einem oder mehreren Bis(hydroxyalkylestern) einer α,β-olefinisch ungesättigten Dicarbonsäure ausgewählt aus Malein-, Fumar-, Itacon-, Citracon-, Mesaconsäure sowie Methylenbernsteinsäure,
   (B3) 0,5 bis ca. 20 %, bevorzugt 1 bis 15 %, besonders bevorzugt 2 bis 10 %, einem oder mehreren Vinylmonomeren (B31) mit einer Carbonylfunktion oder einem oder mehreren Vinylmonomeren (B32) mit einer Amino-, Hydrazid- oder Hydrazingruppe, sowie
   (B4) 0 bis ca. 90 %, bevorzugt 5 bis 50 %, einem oder mehreren Alkylestern einer α,β-olefinisch ungesättigten Carbonsäure oder einem oder mehreren Dialkylestern einer α,β-olefinisch ungesättigten Dicarbonsäure,
   (B5) 0 bis ca. 30 %, bevorzugt 2 bis 25 % anderen Vinylmonomeren, ausgewählt aus Vinylestern von linearen, verzweigten oder cyclischen aliphatischen Monocarbonsäuren mit 1 bis 20 Kohlenstoffatomen, Vinyläthern, Vinylhalogeniden und Nitrilen von α,β-olefinisch ungesättigten Carbonsäuren und
(C) ein Vernetzungsmittel ausgewählt aus Vernetzungsmitteln (C1) mit mindestens zwei mit Carbonylgruppen reaktiven Gruppen ausgewählt aus primären Aminogruppen, Hydrazin- und Hydrazidgruppen und Vernetzungsmitteln (C2) mit mindestens zwei Carbonylgruppen, wobei die Vernetzungsmittel (C1) bei Verwendung der Vinylmonomeren (B31) und die Vernetzungsmittel (C2) bei der Verwendung von Vinylmonomeren (B32) eingesetzt werden, und die Menge des Vernetzungsmittels so gewählt wird, daß die Stoffmenge der reaktiven Gruppen des Vernetzungsmittels (C) 65 bis 130 %, bevorzugt 70 bis 120 %, besonders bevorzugt 85 bis 110 %, und ganz besonders bevorzugt 90 bis 100 % der Stoffmenge der reaktiven Gruppen der Wiederholungseinheiten (B3) im Polymer beträgt, und
wobei das Vinylpolymer (B) durch radikalisch initiierte Emulsionspolymerisation in Gegenwart einer wäßrigen Losung oder Dispersion des Polymeren (A) hergestellt wird, und wobei gegebenenfalls Pfropfcopolymere entstehen, die Pfropfäste abgeleitet von den Monomeren (B1) bis (B5) auf einem Rückgrat von Polyester (A) aufweisen. Unter Festharz wird oben und im Folgenden der Polymeranteil der Dispersion verstanden, d.i. ohne Wasser, Vernetzungsmittel und gegebenenfalls weitere Zusätze.

Der Polyester (A) wird durch Polykondensation von zweiwertigen organischen Hydroxyverbindungen (A1), zweibasigen organischen Carbonsäuren (A2), gegebenenfalls mindestens dreiwertigen organischen Hydroxyverbindungen (A3), gegebenenfalls mindestens dreibasigen organischen Carbonsäuren (A4), gegebenenfalls organischen Hydroxycarbonsäuren (A5) sowie organischen Verbindungen (A6) mit mindestens zwei funktionellen Gruppen ausgewählt aus Hydroxyl-, Carbonsäure-, Amino- und Mercapto-Gruppen und mindestens einer Sulfon- oder Phosphonsäuregruppe hergestellt. Bis zu einem Stoffmengenanteil von 80 % können die organischen Hydroxyverbindungen (A1) auch durch organische Amine (A7) mit zwei Aminogruppen oder durch organische Hydroxyamine (A9) mit jeweils einer primären oder sekundären Aminogruppe und einer Hydroxylgruppe, wobei die Aminogruppe bevorzugt eine primäre Aminogruppe ist, die an einem aliphatischen Kohlenstoffatom gebunden ist, ersetzt werden. Ebenso können bis zu 80 % der Stoffmenge der optional einzusetzenden Hydroxycarbonsäuren (A5) durch Aminocarbonsäuren (A8) ersetzt werden. Gegebenenfalls werden statt der oben genannten Verbindungen auch deren reaktive Derivate eingesetzt; beispielsweise statt der Carbonsäuren deren Anhydride, Halogenide oder Isopropenylester, statt der Alkohole deren Ester, insbesondere Acetate. Statt der Hydroxycarbonsäuren lassen sich auch Lactone einsetzen, statt der Aminocarbonsäuren auch Lactame oder Salze von Diaminen und Dicarbonsäuren. Beispiel für die zur Synthese der Polyester geeigneten Komponenten, die sich jeweils einzeln oder in Mischung einsetzen lassen, sind:
(A1) organische Dihydroxyverbindungen, besonders bevorzugt solche, bei denen die Hydroxylgruppen aliphatisch gebunden sind, ausgewählt aus linearen, verzweigten und cycloaliphatischen Dihydroxyverbindungen mit 2 bis 40 Kohlenstoffatomen sowie den Polyoxyalkylenglykolen mit Polymerisationsgraden bis zu 100, wobei der Alkylenrest ausgewählt ist aus 1,2-Äthylen-, 1,2- und 1,3-Propylen- und 1,4-Butylenresten. Beispiele für geeignete Verbindungen sind Äthylenglykol, 1,2- und 1,3-Propylenglykol, Butandiol-1,4, Hexandiol-1,6, Neopentylglykol, Pinakol, Cyclohexandimethanol, perhydriertes Bisphenol A und perhydriertes Bisphenol F, 1,4-Dihydroxycyclohexan, Diäthylenglykol, Triäthylenglykol, oligomere und polymere Polyoxyäthylen-, Polyoxypropylen- und Polyoxybutylenglykole, wobei auch Copolymere mit z.B. Oxyäthylen- und Oxypropylen-Bausteinen eingeschlossen sind. Es lassen sich auch untergeordnete Mengen, beispielsweise Massenanteile bis zu 3 %, an Bishydroxymethylaromaten wie 1,4-Bishydroxymethylbenzol oder 1,2-Bishydroxymethylfuran einsetzen. Bei der Verwendung von Polyoxyalkylenglykolen mit einem Stoffmengenanteil von mehr als 20 % Oxyäthylengruppen in den Oxyalkylengruppen erhält der entstehende Polyester schon dadurch einen hydrophilen Charakter.

Ein Massenanteil zwischen 1 und 20 %, vorzugsweise 3 bis 10 % der Dihydroxyverbindungen kann durch Trihydroxyverbindungen oder höherfunktionelle Polyole (A3) ersetzt werden. Geeignete Trihydroxyverbindungen sind die linearen oder verzweigten oder cyclischen aliphatischen Trihydroxyverbindungen mit 3 bis 20 Kohlenstoffatomen, wie zum Beispiel Glycerin, Trimethyloläthan und -propan, höherfunktionelle Hydroxyverbindungen sind Erythrit, Pentaerythrit, Sorbit und Mannit.

Geeignete Säuren (A2) sind die organischen Dicarbonsäuren sowie andere organische Säuren mit zwei Säuregruppen, ausgewählt aus Carboxyl-, Sulfonsäure-, Sulfinsäure-, Phosphonsäure- und Phosphinsäuregruppen. Die geeigneten zweibasigen Säuren sind lineare, verzweigte oder cyclo-aliphatische Disäuren sowie aromatische und gemischt aliphatischaromatische Disäuren mit 2 bis 40 Kohlenstoffatomen. Beispiele geeigneter Disäuren sind Oxalsäure, Malonsäure, Bernsteinsäure, Adipinsäure, Glutarsäure, Pimelinsäure und Korksäure, dimere Fettsäuren wie z.B. dimere Ölsäure oder Elaidinsäure sowie Gemische natürlich vorkommender ungesättigter Fettsäuren, die dimerisiert wurden. Beispiele für aromatische Disäuren sind die isomeren Phthalsäuren ortho-, Iso- und Tere-phthalsäure sowie 2,3- und 2,6-Naphthalindicarbonsäure.

Ein Massenanteil von 1 bis 10 %, bevorzugt 3 bis 6 % der Disäuren läßt sich durch drei- oder mehrbasige Säuren oder deren Anhydride (A4) ersetzen. Beispielsweise lassen sich Trimellithsäure, Trimesinsäure, Pyromellithsäure und Naphthalintetracarbonsäurebisanhydrid verwenden.

Geeignete organische Hydroxysäuren (A5) sind aliphatische und aromatische Hydroxysäuren mit je einer Hydroxyl- und Carbonsäuregruppe und 2 bis 20, bevorzugt 3 bis 12 Kohlenstoffatomen, die gegebenenfalls auch als Lacton eingesetzt werden können. Beispiele sind γ-Hydroxybuttersäure, δ-Hydroxyvaleriansäure, ε-Hydroxycapronsäure, die Lactone dieser Säuren, p-Hydroxybenzoesäure und 2-Hydroxynaphthalincarbonsäure-6. Es ist im Rahmen der Erfindung auch möglich, Hydroxysäuren mit jeweils mehr als einer Hydroxyl- oder Säuregruppe in untergeordneten Mengen einzusetzen. Bevorzugt werden 1 bis 20 % der Stoffmenge an Hydroxysäuren (A5) mit jeweils einer Säure- und Hydroxylgruppe durch Hydroxysäuren mit jeweils mindestens einer Säuregruppe und mindestens einer Hydroxylgruppe ersetzt, wobei von einer der beiden Gruppenarten mindestens zwei funktionelle Gruppen vorhanden sind.

Die Verbindungen (A6) enthalten vorzugsweise je zwei Hydroxyl-, Amino- oder Carbonsäuregruppen oder deren Salze, oder zwei unterschiedliche Gruppen, die aus den Hydroxyl-, Amino- und Carbonsäuregruppen ausgewählt sind, sowie mindestens eine Sulfon- oder Phosphonsäuregruppe. Die stärker sauren Säuregruppen können auch teilweise oder ganz neutralisiert sein. Beispiele für geeignete Verbindungen sind Taurin, Glykolsulfonsäuren und Derivate, insbesondere äthoxylierte Sulfoisophthalsäure und Sulfoterephthalsäure, Sulfobernsteinsäure, 4-Amino-3-hydroxynaphthalinsulfonsäure-1, 4,5-Dihydroxynaphthalin-2,7-disulfonsäure, 2,5-Diaminobenzolsulfonsäure, 2,5-Dihydroxy-1,4-benzoldisulfonsäure, 2,3-Dimercaptopropansulfonsäure, 4-Amino-5-hydroxynaphthalinsulfonsäure-1 und 6,7-Dihydroxynaphthalinsulfonsäure-2 sowie deren Alkali-, Ammonium- und Erdalkalisalze. Die Menge der Verbindungen (A6) im Polyester wird so bemessen, daß der entstehende Polyester wasserlöslich oder wasserdispergierbar wird. Unter wasserlöslich wird ein solcher Polyester verstanden, dessen gesättigte wäßrige Lösung bei 25 °C einen Massenanteil von mindestens 5 % an gelöstem Polyester aufweist. Als wasserdispergierbar wird hier ein Polyester bezeichnet, der eine wäßrige Dispersion mit einem Massengehalt von mindestens 5 % an dispergiertem Polyester bildet, wobei sich innerhalb von 24 Stunden bei Lagerung der Dispersion bei Raumtemperatur kein sichtbarer Bodensatz bildet.

Die Verbindungen (A7) sind organische Diamine mit zwei primären oder sekundären Aminogruppen, deren organischer Rest aliphatisch oder aromatisch oder araliphatisch ist. Bis zu 10 % der Stoffmenge der Diamine können durch Triamine oder höherfunktionelle Amine ersetzt sein. Bevorzugt werden aliphatische Diamine mit 2 bis 40 Kohlenstoffatomen, die linear, cyclisch oder verzweigt sein können. Unter diesen werden primäre Diamine besonders bevorzugt. Beispiele für geeignete Verbindungen sind Äthylendiamin, Trimethylendiamin, Tetramethylendiamin, 1,6-Diaminohexan, 2,2,4-Trimethylhexan-1,6-diamin, Isophorondiamin, Cyclohexandiamin, 1,3- und 1,4-Bis-aminomethylcyclohexan und TCD-Diamin. Ebenso geeignet sind solche araliphatischen Diamine, in denen die Aminogruppen mit aliphatischen Kohlenstoffatomen verknüpft sind, wie m- und p-Xylylendiamin. Weiter sind besonders geeignet die Polyiminoalkylenamine vom Typ Diäthylentriamin, Triäthylentetramin und Tetraäthylenpentamin.

Die Verbindungen (A8) sind Aminocarbonsäuren, die vorzugsweise je eine Aminogruppe und eine Carbonsäuregruppe aufweisen. Besonders bevorzugt werden aliphatische lineare oder verzweigte ω-Aminocarbonsäuren wie β-Aminopropionsäure, γ-Aminobuttersäure, δ-Aminovaleriansäure und ε-Aminocapronsäure. Die drei letztgenannten Säuren lassen sich mit Vorteil auch in der Form ihrer Lactame einsetzen.

Die Verbindungen (A9) enthalten vorzugsweise je eine Aminogruppe, bevorzugt eine primäre Aminogruppe, und eine Hydroxylgruppe, wobei bis zu 10 % der Stoffmenge dieser bevorzugten Monohydroxymonoamine durch Verbindungen mit mehr als jeweils einer Hydroxyl- und Aminogruppe ersetzt sein können. Sie haben insgesamt 2 bis 36 Kohlenstoffatome, und lassen sich einzeln oder in Mischung einsetzen. Die primäre Aminogruppe ist bevorzugt an einem aliphatischen Kohlenstoffatom gebunden. Beispiele geeigneter Verbindungen (A9) sind Äthanolamin, Hydroxypropylamin, 1,3-Diaminopropanol, 4-Aminobutanol-1, Diäthanolamin, Diisopropanolamin und Triäthanolamin.

Die Polyester (A) werden auf bekannte Weise durch Kondensation in der Schmelze oder in Lösung hergestellt. Während sich die Lösungskondensation besonders für die Umsetzung reaktiver Derivate der oben genannten Verbindungen (z.B. Säurechloride) eignet, wird die Kondensation in der Schmelze ansonsten vorgezogen. Die Reaktion in der Schmelze läßt sich durch die üblicherweise verwendeten Katalysatoren beschleunigen, wie Erdalkalioxide, Übergangsmetallsalze und -oxide, besonders beispielsweise Mangan-, Titan-, Vanadium-, Germanium- und Zinnverbindungen.

Eine bevorzugte Verfahrensweise ist, den Polyester nach der Kondensation in mindestens einem der Monomeren (B1), (B4) oder (B5) zu lösen. Die weiteren erforderlichen Monomere können vor Beginn der Polymerisation oder während der Polymerisation zugesetzt werden.

Die Polyester können nach ihrer Synthese durch Zugabe einer stöchiometrischen Menge an Base, oder mindestens 1, bevorzugt mindestens 5, und besonders bevorzugt mindestens 20 % der stöchiometrischen Menge an Base neutralisiert werden. Als Basen lassen sich wäßrige Lösungen von (Erd-)Alkalihydroxiden oder Ammoniak verwenden, ebenso auch organische Amine, wie Äthanolamin, Dimethyläthanolamin, Triäthylamin, Triäthylentetramin, Diäthylamin oder N,N-Dimethylaminopropylamin. Die neutralisierten oder teilneutralisierten Polyester (A) werden dann in Wasser gelöst, wobei der Massengehalt an Polyester in der Lösung zwischen 10 und 70 %, bevorzugt 20 bis 60 %, und besonders bevorzugt 30 bis 55 % beträgt. Setzt man zur Synthese der Polyester (A) Salze der Verbindungen (A6) ein, so kann der Neutralisationsschritt entfallen. Auf diese Weise lassen sich Dispersionen erhalten, die frei von (ansonsten zur Neutralisation benutzten) Aminen sind.

Die Mischung der Monomeren (B1) bis (B5), soweit vorhanden, wird in der Lösung des Polyesters auf einmal dispergiert, danach oder gleichzeitig oder davor wird der Initiator zugegeben. Es ist jedoch ebenso möglich, lediglich einen Teil der Monomeren in der wäßrigen Lösung zu dispergieren, dabei nur einen Teil oder die gesamte Menge des Initiators zuzufügen und während der Polymerisation den Rest der Monomermischung sowie gemeinsam mit dieser Mischung oder getrennt gegebenenfalls weiteren Initiator kontinuierlich oder portionsweise zuzugeben. Dabei kann die stoffliche Zusammensetzung der Monomermischung variiert werden, sodaß die entstehenden Polymeren chemisch uneinheitlich werden.

Eine weitere bevorzugte Verfahrensweise ist, die Polyester (A) zunächst in einem organischen Lösungsmittel zu lösen, wobei besonders bevorzugt der Polyester nicht als Festharz ausgetragen wird, sondern nach der Polykondensation in einem organischen Lösungsmittel angelöst wird, danach mindestens eines der Monomere zuzugeben und diese Mischung in Wasser zu dispergieren. Geeignete Lösungsmittel sind mäßig polare aprotische und protische Lösungsmittel wie N-Methylpyrrolidon, Butylglykol und Methoxypropanol.

Es ist auch möglich, zunächst nur den Initiator in Wasser zu lösen und dann den Polyester und die Monomeren gemeinsam oder getrennt einzudispergieren. Durch Erwärmen der Lösung auf eine Temperatur, bei der die Geschwindigkeit der Radikalbildung aus dem Initiator hinreichend ist, wird die Polymerisation ausgelöst. Die Temperatur kann im Lauf der Polymerisation gesteigert oder gesenkt werden, wobei auch die Art des nachdosierten Initiators geändert werden kann. Dadurch lassen sich auch vom Polymerisationsgrad uneinheitliche Polymere herstellen, mit breiten oder engeren Verteilungen des Polymerisationsgrades. Bestimmend ist dafür die Zerfallsgeschwindigkeit von peroxidischen oder Azo-Initiatoren in Abhängigkeit von der gewählten Temperatur und die Rekombinationsgeschwindigkeit der gebildeten Radikale gegenüber der Geschwindigkeit der Anlagerung eines weiteren Monomeren an das Polymerradikal.

Durch Zusatz von Reglern, beispielsweise Mercaptanen wie Dodecylmercaptan oder Hexandithiol läßt sich der mittlere Polymerisationsgrad ebenfalls beeinflussen.

Die Polymerisation wird durch geeignete Initiatoren ausgelöst, die gemeinhin für radikalische wäßrige Emulsionspolymerisation verwendet werden. Üblicherweise handelt es sich dabei um wasserlösliche radikalbildende Verbindungen, beispielsweise Wasserstoffperoxid, Peressigsäure, Perbenzoesäure sowie Peroxodisulfate, beispielsweise Kalium- oder Ammoniumperoxodisulfat, Perphosphate, Peroxycarbonate und Hydroperoxide, wie tert.-Butylhydroperoxid. Bevorzugt werden auch kombinierte Systeme, die aus wenigstens einem (bevorzugt organischen) Reduktionsmittel und wenigstens einem Peroxid und/oder Hydroperoxid zusammengesetzt sind, z.B. Natriumpersulfat und Natriumformaldehydsulfoxylat oder tert.-Butylhydroperoxid und das Natriumsalz der Hydroxymethansulfinsäure oder Wasserstoffperoxid und Ascorbinsäure. Andere geeignete Redoxkatalysatorsysteme sind beispielsweise Cumolhydroperoxid und Natriummetabisulfit oder Schwefeldioxid und Ammoniumpersulfat oder Ascorbinsäure und tert.-Butylhydroperoxid.

Besonders bevorzugt werden auch kombinierte Systeme, die darüber hinaus eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit oder Natrium-hydrogensulfit und anstelle von Wasserstoffperoxid häufig Alkalimetallperoxodisulfate und/oder Ammoniumperoxodisulfate angewendet werden. Anstelle eines wasserlöslichen Eisen(II)-Salzes wird häufig auch ein Vanadium-Salz oder eine Kombination aus wasserlöslichen Eisen- und Vanadium-Salzen benutzt.

Geeignet sind auch Azo-Verbindungen, wie 4,4-Azo-bis-(cyanopentansäure). Die Katalysatoren werden in üblichen katalytisch wirksamen Konzentrationen verwendet. Diese liegen im allgemeinen bei Massenanteilen von 0,01 bis 4,0 %, bezogen auf die Masse der Dispersion. Bevorzugt beträgt der Massenanteil der eingesetzten radikalischen Initiatorsysteme, bezogen auf die Gesamtmasse der zu polymerisierenden Monomeren, 0,1 bis 2 %.

In besonderen Ausführungsformen können weitere für die Emulsionspolymerisation übliche Komponenten verwendet werden. Dies sind beispielsweise pH-Puffer und beliebige andere Bestandteile, die neben dem erfindungsgemäßen Säuregruppen-haltigen Polymeren A in der Reaktionsmischung mit verwendet werden können. Dies sind beispielsweise Salze zur pH-Wert Regulierung wie NaHCO₃, Na₂CO₃, Natriumacetat, Na₂HPO₄ oder andere Phosphate, Carbonate, Citrate, die zur Stabilisierung des pH-Wertes beitragen können. Derartige Additive können mit Massenanteilen von bis zu 3 % in der Dispersion enthalten sein, solange ihr Zusatz die Qualität der Dispersion nicht negativ beeinflußt. Mit Vorteil wird bei der Durchführung der Emulsionspolymerisation neben Einstellung einer Start-Polymerkonzentration eine Vorpolymerisation eines Massenanteils von 1 bis 15 % der Initiator- und Monomerenmasse durchgeführt, um die Qualität der Dispersion, insbesondere bezüglich Transparenz und Viskosität, exakter einzustellen (Entkopplung von Polymerisatteilchenbildungsphase und Polymerisatteilchenwachstumsphase).

Die Monomeren (B1) sind Styrolderivate oder bevorzugt Styrol selbst. Von den alkylierten Styrolen, die in Massenanteilen von 5 bis 50 % zu dem unsubstituierten Styrol hinzugefügt werden können, werden α-Methylstyrol, die verschiedenen Methylstyrole, bei denen die Methylgruppe am Benzolkern selbst steht, besonders bevorzugt die kommerzielle Mischung der verschiedenen Isomere, die als Vinyltoluol bezeichnet wird, sowie Äthylstyrol, Dimethylstyrol, t-Butylstyrol bevorzugt verwendet.

Die Monomeren (B2) sind Hydroxyalkylester von α,β-olefinisch ungesättigten Carbonsäuren ausgewählt aus den oben genannten Acryl-, Methacryl-, Croton- oder Isocrotonsäure oder Bis(hydroxyalkylester) einer α,β-olefinisch ungesättigten Dicarbonsäure ausgewählt aus Malein-, Fumar-, Itacon-, Citracon-, Mesaconsäure sowie Methylenbernsteinsäure, oder deren Mischungen. Bevorzugt werden Hydroxyalkylacrylate und -methacrylate mit 2 bis 8 Kohlenstoffatomen im Alkylrest, besonders Hydroxyäthyl- und Hydroxypropylacrylat und -methacrylat. Auch Mono-Ester drei- und mehrwertiger Alkohole mit einer α,β-olefinisch ungesättigten Carbonsäure sind geeignet, als Beispiel werden Glycerin- und Trimethylolpropan-mono(meth)acrylat genannt. Ebenso geeignet sind Bis(hydroxyalkylester) einer α,β-olefinisch ungesättigten Dicarbonsäure ausgewählt aus Malein-, Fumar-, Itacon-, Citracon-, Mesaconsäure sowie Methylenbernsteinsäure.

Die Monomeren (B3) sind olefinisch ungesättigte Monomere, bevorzugt aliphatische einfach olefinisch ungesättigte Monomere mit 4 bis 20, mit bevorzugt 5 bis 15 Kohlenstoffatomen und mit mindestens einer Carbonylfunktion, also einer Aldehyd- oder Ketongruppe (B31) oder mit mindestens einer primären Aminogruppe oder einer Hydrazin- oder Hydrazidgruppe (B32). Geeignete Monomere (B31) sind Diacetonacrylamid, der Vinylester der Acetessigsäure und der Brenztraubensäure, Acrolein, Methacrolein, Crotonaldehyd, Vinylbenzaldehyd, Vinylalkylketone mit 1 bis 8 Kohlenstoffatomen in der Alkylgruppe wie Vinylmethylketon, Vinyläthylketon, Vinylisobutylketon, Vinylamylketon und 2-Äthylhexylvinylketon, Methacryl- und Acrylester des 3-Hydroxypropionaldehyds, die an einem oder beiden Kohlenstoffatomen des Propionaldehydrests mit Alkylgruppen mit jeweils 1 bis 4 Kohlenstoffatomen substituiert sein können, sowie (Meth)Acrylamidopivalinaldehyd, Diaceton(meth)acrylat, Acetoacetoxyäthyl(meth)acrylat, und die Acetessigester von Butan-1,4-diol- und Propan-1,2- und -1,3-diolmono(meth)acrylat; geeignete Monomere (B32) sind Vinylmonomere, die mindestens eine primäre Aminogruppe aufweisen, wie zum Beispiel Aminoäthylacrylamid und andere aminoalkylsubstituierte Amide olefinisch ungesättigter Carbonsäuren, aminosubstituierte Styrole, sowie aminosubstituierte (Meth)Acrylsäureester und (Meth)Acrylamide abgeleitet von aliphatischen Alkoholen bzw. primären aliphatischen Aminen mit 1 bis 8 Kohlenstoffatomen.

Es sind auch Mischungen der Monomeren (B31) und (B32) verwendbar; es ist jedoch bevorzugt, daß jeweils ausschließlich Monomere der Typen (B31) oder (B32), nicht jedoch beide Typen gleichzeitig eingesetzt werden.

Copolymere mit Hydrazingruppen sind im Allgemeinen nicht direkt durch Copolymerisation mit Hydrazingruppen-haltigen und anderen Vinylmonomeren zugänglich, da die Hydrazingruppen zur Vernetzung neigen. Man kann solche Copolymere durch polymeranaloge Umsetzung von funktionalen Copolymeren mit Säurechloridgruppen oder Estergruppen und Hydrazin oder dessen Monoalkylderivaten herstellen. Die funktionalen Copolymere sind beispielsweise zugänglich durch Copolymerisation von geringen Mengen von (Meth)acrylsäurechlorid oder Crotonsäurechlorid mit anderen Vinylmonomeren ausgewählt aus den Klassen (B1), (B2) und (B4). Ester von niedrigen Alkoholen mit 1 bis 4 Kohlenstoffatomen in der Alkylgruppe mit α,β-olefinisch ungesättigten Carbonsäuren wie Methylmethacrylat, Äthylacrylat, Butylacrylat etc. eignen sich besonders für die Hydrazinolyse.

Die Monomeren (B4) sind Alkylester einer α,β-olefinisch ungesättigten Carbonsäure oder, Dialkylester einer α,β-olefinisch ungesättigten Dicarbonsäure, wobei die Alkylgruppe linear, cyclisch oder verzweigt sein kann und 1 bis 20, bevorzugt 1 bis 12 Kohlenstoffatome aufweist. Beispiele geeigneter Verbindungen sind Ester von Säuren ausgewählt aus Acryl-, Methacryl-, Croton-, Isocroton-, und Vinylessigsäure mit Alkoholen ausgewählt aus Methanol, Äthanol, n- und iso-Propanol, n-, iso-, sek.- und tert. -Butanol, Amylalkohol, Hexylalkohol, 2-Äthylhexylalkohol, Stearyl- und Palmitylalkohol, ebenso die Diester der genannten Alkohole mit Maleinsäure, Fumarsäure, Itacon-, Citracon- und Mesaconsäure.

Die Monomeren (B5), die zu Massenanteilen von 0 bis ca. 30 %, bevorzugt 2 bis 25 % an wiederholenden Einheiten im Polymer (B) führen, werden ausgewählt aus Vinylestern von linearen, verzweigten oder cyclischen aliphatischen Monocarbonsäuren mit 1 bis 20 Kohlenstoffatomen, Vinyläthern, Vinylhalogeniden und Nithlen von α,β-olefinisch ungesättigten Carbonsäuren. Geeignete Verbindungen sind: Vinylacetat, Vinylpropionat, Vinylbutyrat, Vinylester von in α-Stellung verzweigten aliphatischen Monocarbonsäuren mit im Mittel 5 bis 20 Kohlenstoffatomen in der Carbonsäure, die beispielsweise unter der Bezeichnung ®Versatic-Säure 5 oder 10 im Handel erhältlich sind ("Vinylversatat-5" und "Vinylversatat-10"); ferner Vinylchlorid, Vinylmethyläther, Vinylbenzyläther, Acryl- und Methacrylnitril.

Die erfindungsgemäßen Dispersionen der Polymeren (A) und (B) weisen einen Massenanteil an Feststoff von 20 bis 80, bevorzugt von 30 bis 70 % auf.

Die Vernetzungsmittel (C) weisen mindestens zwei reaktive Gruppen auf, die mit den funktionellen Gruppen aus den Monomeren bzw. den wiederholenden Einheiten (B3) reagieren können; die Funktionalität des Vernetzungsmittels ist der Funktionalität des Polymeren (B) komplementär zu wählen. Die Menge des Vernetzungsmittels wird so bemessen, daß die Stoffmenge der reaktiven Gruppen des Vernetzungsmittels (C) 65 bis 130 %, bevorzugt 70 bis 120 %, besonders bevorzugt 85 bis 110 %, und ganz besonders bevorzugt 90 bis 100 % der Stoffmenge der reaktiven Gruppen der funktionellen Monomeren bzw. wiederholenden Einheiten (B3) beträgt. Die Art des eingesetzten Vernetzungsmittels bestimmt sich aus der Gegenwart von wiederholenden Einheiten (B31) oder (B32) im Polymer (B). Weist das Polymer (B) reaktive Gruppen des Carbonyltyps auf, so wird ein Vernetzungsmittel (C1) gewählt mit mindestens zwei mit Carbonylgruppen reaktiven Gruppen ausgewählt aus primären Aminogruppen, Hydrazin- und Hydrazidgruppen. Geeignete Verbindungen sind: Hydrazin selbst, Alkylenbishydrazine wie 1,2-Dihydrazinoäthan und 1,4-Dihydrazinobutan, Dihydrzzide aliphatischer oder aromatischer Dicarbonsäuren mit 2 bis 40 Kohlenstoffatomen wie Kohlen-, Oxal-, Malon-, Bernstein-, Glutar-, Adipin-, Pimelin- und Kork-säurebishydrazid, Cyclohexandicarbonsäurebishydrazid, die Bishydrazide der Phthal-, Isophthal- und Terephthalsäure und die Bishydrazide von dimeren Fettsäuren, sowie die Bissemicarbazide von α,ω-Alkylen-Diaminen mit 2 bis 40 Kohlenstoffatomen im linearen, verzweigten oder cyclischen Alkylenrest und von aromatischen Diaminen wie den isomeren Phenylendiaminen. In geringen Mengen (Massenanteilen bis zu 5 % bezogen auf die Masse aller Hydrazinverbindungen) können auch höherfunktionelle Hydrazinverbindungen eingesetzt werden. Beispiele für solche Verbindungen sind Trihydrazide von aromatischen Tricarbonsäuren wie Trimellithsäure und Trimesinsäure, Nitrilotriessigsäuretrihydrazid, Pyromellithsäuretetrahydrazid und Äthylendiamintetraessigsäuretetrahydrazid. Vernetzungsmittel (C2) mit mindestens zwei Carbonylgruppen werden eingesetzt, wenn das Polymere funktionelle Gruppen vom Amin- oder Hydrazintypus aufweist. Geeignete Verbindungen sind Dialdehyde und Diketone mit 2 bis 40 Kohlenstoffatomen, bevorzugt 3 bis 20 Kohlenstoffatomen, wobei auch in geringen Mengen (bis zu einem Massenanteil von 5 %, bezogen auf die Masse aller Carbonylverbindungen) tri- und höherfunktionelle Carbonylverbindungen eingesetzt werden können. Geeignete Dialdehyde sind beispielsweise Glyoxal, Malondialdehyd, Glutar- und Succin-Dialdehyd; geeignete Diketone sind Acetylaceton, Acetonylaceton, als Triketon sei der Diessigester des Diacetonalkohols genannt.

Die erhaltenen wäßrigen Dispersionen werden angewendet als Bindemittel in Beschichtungsmitteln für Kunststoffe, Metalle, Holz, Papier, Karton, poröse Substrate wie Leder, Stoffe, Vliese und mineralische Substrate wie Stein, Fliesen, Porzellan, Steinzeug oder Beton. Mit den erfindungsgemäßen Dispersionen lassen sich auch Kleber für die genannten Substrate formulieren.

Die damit hergestellten Beschichtungen weisen guten Glanz und gute Beständigkeit gegen Wasser, Säuren, Alkalien und organische Flüssigkeiten auf. Die Beständigkeitseigenschaften sind gegenüber den beispielsweise aus WO-A 94/01478 bekannten Beschichtungen deutlich verbessert.

Die nachfolgenden Beispiele verdeutlichen die Erfindung. Dabei wird die Säurezähl (SZ) gemäß DIN 53 402 bestimmt als die auf die Masse des betreffenden Feststoffs in g bezogene Masse an KOH in mg, die zur Neutralisation von 1 g dieses Feststoffs erforderlich ist. Die Hydroxylzahl (OHZ) gemäß DIN 53 240 gibt die auf die Masse des betreffenden Feststoffs in g bezogene Masse an KOH in mg an, welche genausoviele Hydroxylgruppen aufweist wie 1 g des betreffenden Feststoffes.

### Beispiel 1 Dispergieren des gelösten Polyesters

350 g Neopentylglykol, 130 g Äthylenglykol, 80 g Trimethylolpropan, 320 g Terephthalsäure, 320 g Isophthalsäure und 50 g Sulfoisophthalsäure-Na-Salz werden in einem Kolben mit Kolonne und Destillationsaufsatz vorgelegt und langsam auf 210 °C erhitzt, wobei die Kopftemperatur nicht über 100 °C steigen soll. Nach 3 Stunden bei 210 °C wird die Säurezahl des Harzes bestimmt. Ist die Säurezahl unter 10 mg/g, so wird auf 140 °C gekühlt und 130 g Adipinsäure zugegeben, ansonsten wird noch weiter kondensiert. Die Temperatur wird wieder langsam auf 210 °C gesteigert. Bei 210 °C wird ein verminderter Druck von ca. 5 kPa (50 mbar) während einer Stunde angelegt. Im Anschluß wird mit Stickstoff belüftet und der Ansatz in eine Blechwanne ausgegossen. Die OHZ des Polyesters beträgt ca. 60 mg/g, die Säurezahl ca. 1 mg/g.

320 g des so erhaltenen Harzes werden vorgelegt und auf 120 °C erwärmt. Es werden 80 g Butylglykol zugegeben. Sobald man eine homogene Lösung erhalten hat, wird auf 90 °C gekühlt und 600 g erwärmtes Wasser unter Rühren zugegeben. Nach beendeter Zugabe wird die erhaltene Dispersion auf 80 °C gekühlt. Bei 80 °C wird 0,06 g Ammoniumperoxodisulfat gelöst in Wasser zugegeben. Nach 5 Minuten wird dann eine Monomermischung aus 35 g Styrol und 2 g Diacetonacrylamid gleichmäßig über 1 Stunde bei 80 °C zudosiert. Nach beendeter Zudosierung wird 0,03 g Ammoniumperoxodisulfat zugegeben und weitere 2 Stunden gerührt.

Dann wird die Dispersion auf 30 °C gekühlt und 0,9 g Adipinsäuredihydrazid gelöst in Wasser zugegeben.

### Beispiel 2 Dispergieren des gelösten Polyesters

396 g Neopentylglykol, 447 g Äthylenglykol, 407 g Terephthalsäure, 533 g t-Butyl-Isophthalsäure und 45 g Sulfoisophthalsäure-Li-Salz werden in einem Kolben mit Kolonne und Destillationsaufsatz vorgelegt und langsam auf 210 °C erhitzt, wobei die Kopftemperatur nicht über 100 °C steigen soll. Nach 2 Stunden bei 210 °C wird die Säurezahl des Harzes bestimmt. Ist die Säurezahl unter 10 mg/g, wird ein verminderter Druck von ca. 3 kPa (30 mbar) während 2 Stunden angelegt, ansonsten wird noch weiter kondensiert. Im Anschluß wird mit Stickstoff belüftet und der Ansatz in eine Blechwanne ausgegossen. Die Viskosität der 40 %-igen Lösung des Harzes in N-Methylpyrrolidon beträgt 700 mPa·s und die SZ ca. 5 mg/g.

320 g des so erhaltenen Harzes werden vorgelegt und auf 120 °C erwärmt. Es werden 80 g Butylglykol zugegeben. Sobald man eine homogene Lösung erhalten hat, wird auf 90 °C gekühlt und 600 g erwärmtes Wasser zugegeben. Nach beendeter Zugabe wird die Dispersion auf 80 °C gekühlt. Bei 80 °C wird 0,06 g Ammoniumperoxodisulfat gelöst in Wasser zugegeben. Nach 5 Minuten wird dann unter Rühren eine Monomermischung aus 35 g Styrol, 15 g Hydroxyäthylmethacrylat und 2 g Diacetonacrylamid gleichmäßig über 1 Stunde bei 80 °C zudosiert.
Nach beendeter Zudosierung wird 0,03 g Ammoniumperoxodisulfat zugegeben und weitere 2 Stunden gerührt. Dann wird die Dispersion auf 30 °C gekühlt und 0,9 g Adipinsäuredihydrazid gelöst in Wasser zugegeben.

### Beispiel 3 Dispergieren des in Lösungsmittel und Monomeren gelösten Polyesters

100 g Äthylenglykol, 520 g Neopentylglykol, 200 g Trimethylolpropan, 25 g Laurinsäure, 560 g Isophthalsäure, 100 g Isononansäure, und 50 g Sulfoisophthalsäure-Li-Salz werden in einem Kolben mit Kolonne und Destillationsaufsatz vorgelegt und langsam auf 210 °C erhitzt, wobei die Kopftemperatur nicht über 100 °C steigen soll. Nach 3 Stunden bei 210 °C wird die Säurezahl des Harzes bestimmt. Ist die Säurezahl unter 10 mg/g, wird bei 210 °C ein verminderter Druck von ca. 5 kPa (50 mbar) während zwei Stunden angelegt, ansonsten wird noch weiter kondensiert. Im Anschluß wird mit Stickstoff belüftet und der Ansatz in eine Blechwanne ausgegossen. Die OHZ des Polyesters ist ca. 85 mg/g, die Säurezahl beträgt ca. 8 mg/g.

320 g des so erhaltenen Harzes, 80 g Butylglykol, 20 g Butylmethacrylat, 30 g Methylmethacrylat und 3 g Diacetonacrylamid werden vorgelegt und auf 80 °C erwärmt. Sobald man eine homogene Lösung erhalten hat, wird in 600 g erwärmtem Wasser unter Rühren dispergiert. Nach beendeter Wasserzugabe wird die Dispersion auf 60 °C gekühlt und 0,27 g t-Butylhydroperoxid und 0,22 g Ascorbinsäure gelöst in Wasser zugegeben.

Nach 3 Stunden mit Rühren bei 60 °C wird noch 0,08 g t-Butylhydroperoxid und 0,08 g in Wasser gelöste Ascorbinsäure zugegeben und 1 Stunde gerührt. Dann wird die Dispersion auf 30 °C gekühlt und 1,3 g Adipinsäuredihydrazid gelöst in Wasser zugegeben.

### Beispiel 4 Dispergieren des lösungsmittelfreien Polyesters in Wasser

100 g Äthylenglykol, 240 g Neopentylglykol, 200 g Terephthalsäure, 285 g Isophthalsäure und 60 g Sulfoisophthalsäure-Natriumsalz werden in einem Kolben mit Kolonne und Destillationsaufsatz vorgelegt und langsam auf 210 °C erhitzt, wobei die Kopftemperatur nicht über 120 °C steigen soll. Nach Erreichen einer Säurezahl von unter 10 mg/g wird ein verminderter Druck von 100 mbar angelegt und so lange bei 210 °C gehalten, bis die Säurezahl unter 10 mg/g gesunken ist. Anschließend wird ein verminderter Druck von 6 kPa (60 mbar) angelegt und bei 230 °C 1 h gehalten. Im Anschluß wird mit Stickstoff belüftet und der Ansatz in eine Blechwanne ausgegossen. Die Viskosität einer 40%-igen Lösung des Harzes in N-Methylpyrrolidon beträgt 400 mPa·s und die Säurezahl ca. 2 mg/g.

400 g des so erhaltenen Harzes werden in 850 g 95 °C heißem Wasser dispergiert, bis eine homogene Lösung vorliegt. Es wird auf 80 °C gekühlt und die Dispersion mit 0,1 g Ammoniumperoxodisulfat versetzt. Nach 3 Minuten wird dann unter Rühren eine Monomermischung aus 30 g Glycidylmethacrylat, 30 g tert.-Butylmethacrylat, 5 g Isobornylmethacrylat, 10 g Hydroxyäthylmethacrylat und 5 g Diacetonacrylamid gleichmäßig über 3 Stunden bei 75 °C zudosiert. Nach beendeter Zudosierung wird 0,03 g Ammoniumperoxodisulfat zugegeben und weitere 2 Stunden bei 80 °C gerührt. Dann wird die Dispersion auf 30 °C gekühlt und 1,1 g Adipinsäuredihydrazid gelöst in Wasser zugegeben.

### Beispiel 5 Isolation des Polyesters als Lösung und nachfolgende Dispersion in Wasser

300 g Äthylenglykol, 140 g Neopentylglykol, 385 g Isophthalsäure und 40 g Sulfoisophthalsäure-Lithiumsalz werden in einem Kolben mit Kolonne und Destillationsaufsatz vorgelegt und langsam auf 210 °C erhitzt, wobei die Kopftemperatur nicht über 140 °C steigen soll. Nach Erreichen einer Säurezahl von unter 10 mg/g wird ein verminderter Druck von 10 kPa (100 mbar) angelegt und so lange bei 210 °C gehalten, bis die Säurezahl unter 1 mg/g gesunken ist. Anschließend wird ein verminderter Druck von 3 kPa (30 mbar) angelegt und bei 210 °C 2 h gehalten. Im Anschluß wird mit Stickstoff belüftet, auf 150 °C gekühlt und bei weiterer Kühlung mit 160 g Butylglykol angelöst. Die Viskosität einer 40%-igen Lösung des Festharzes in N-Methylpyrrolidon beträgt 380 mPa·s, die Säurezahl ist ca. 1 mg/g.

200 g des so erhaltenen Harzlösung werden in 425 g 95 °C heißem Wasser dispergiert, bis eine homogene Lösung vorliegt. Es wird auf 80 °C gekühlt und die Dispersion mit 0,1 g Ammoniumperoxodisulfat versetzt. Nach 3 Minuten wird dann unter Rühren eine Monomermischung aus 30 g Styrol, 30 g Glycidylmethacrylat, 10 g Hydroxyäthylmethacrylat und 5 g Diacetonacrylamid gleichmäßig über 4 Stunden bei 75 °C zudosiert. Nach beendeter Zudosierung wird 0,03 g Ammoniumperoxodisulfat zugegeben und weitere 2 Stunden bei 80 °C gerührt. Dann wird die Dispersion auf 30 °C gekühlt und 1,1 g Adipinsäuredihydrazid gelöst in Wasser zugegeben.

Sämtliche gemäß diesen Beispielen erhaltenen Dispersionen ergeben bereits in geringen Schichtdicken (10 - 40 µm) glänzende Beschichtungen, die frei von Oberflächendefekten sind. Die vernetzten Beschichtungen (30 Minuten bei 80°C) sind beständig gegen Wasser, Alkohole, Fette und Haushaltsreiniger.

## Patentansprüche

1. Selbstvernetzende wäßrige Polymerdispersionen enthaltend Massenanteile im Festharz von
(A) ca. 10 bis ca. 90 % eines wasserverdünnbaren Polyesters, dessen wiederkehrende Einheiten durch Carbonyloxybrücken verknüpft sind, wobei bis zu 80 % dieser Brücken durch Carbonamidbrücken ersetzt sein können, mit einer Lösungsviskosität (40 %ige Lösung in N-Methylpyrrolidon; 25 °C) von über 300 mPa·s, und
(B) ca. 90 bis ca. 10 % eines Vinylpolymeren mit den angegebenen Massenanteilen von wiederholenden Einheiten abgeleitet von
(B1) 0 bis ca. 90 %, Styrol und/oder dessen ein- oder mehrfach alkylierten Derivaten mit 1 bis 10 Kohlenstoffatomen je Alkylgruppe und/oder substituierten Styrolen ausgewählt aus Hydroxystyrol, Halogenstyrolen wie Chlor-, Cyan- und Bromstyrol,
(B2) 0 bis ca. 60 %, einem oder mehreren Hydroxyalkylester der Acryl-, Methacryl-, Croton- oder Isocrotonsäure oder einem oder mehreren Bis(hydroxyalkylestern) einer α,β-olefinisch ungesättigten Dicarbonsäure ausgewählt aus Malein-, Fumar-, Itacon-, Citracon-, Mesaconsäure sowie Methylenbernsteinsäure,
(B3) ca. 0,5 bis ca. 20 %, einem oder mehreren Vinylmonomeren (B31) mit einer Carbonylfunktion oder einem oder mehreren Vinylmonomeren (B32) mit einer Amino- oder Hydrazinfunktion, sowie
(B4) 0 bis ca. 90 %, einem oder mehreren Alkylestern einer α,β-olefinisch ungesättigten Carbonsäure oder einem oder mehreren Dialkylestern einer α,β-olefinisch ungesättigten Dicarbonsäure,
(B5) 0 bis ca. 30 %, anderen Vinylmonomeren, ausgewählt aus Vinylestern von linearen, verzweigten oder cyclischen aliphatischen Monocarbonsäuren mit 1 bis 20 Kohlenstoffatomen, Vinyläthern, Vinylhalogeniden und Nitrilen von α,β-olefinisch ungesättigten Carbonsäuren und
(C) ein Vernetzungsmittel ausgewählt aus Vernetzungsmitteln (C1) mit mindestens zwei mit Carbonylgruppen reaktiven Gruppen ausgewählt aus primären Aminogruppen, Hydrazin- und Hydrazidgruppen und Vernetzungsmitteln (C2) mit mindestens zwei Carbonylgruppen, wobei die Vernetzungsmittel (C1) bei Verwendung der Vinylmonomeren (B31) und die Vernetzungsmittel (C2) bei der Verwendung von Vinylmonomeren (B32) eingesetzt werden, und die Menge des Vernetzungsmittels so gewählt wird, daß die Stoffmenge der reaktiven Gruppen des Vernetzungsmittels (C) 65 bis 130 % der Stoffmenge der reaktiven Gruppen der Wiederholungseinheiten (B3) im Polymer beträgt, und
wobei das Vinylpolymer (B) durch radikalisch initiierte Emulsionspolymerisation in Gegenwart einer wäßrigen Lösung oder Dispersion des Polymeren (A) hergestellt wird.

2. Selbstvernetzende wäßrige Polymerdispersionen nach Anspruch 1, dadurch gekennzeichnet, daß die Dispersionen Massenanteile bis zu 20 % Lösemittel enthalten, bezogen auf die Masse des Festharzes aus (A) und (B).

3. Selbstvernetzende wäßrige Polymerdispersionen nach Anspruch 1, dadurch gekennzeichnet, daß die Dispersionen frei von Lösemitteln sind

4. Selbstvernetzende wäßrige Polymerdispersionen nach Anspruch 1, die Pfropfcopolymere enthalten, die Pfropfäste abgeleitet von den Monomeren (B1) bis (B5) auf einem Rückgrat von Polyester (A) aufweisen.

5. Selbstvernetzende wäßrige Polymerdispersionen nach Anspruch 1, dadurch gekennzeichnet, daß bis zu 80 % der Carbonyloxy-Brücken des Polyesters (A) durch Carbonamidbrücken ersetzt sind.

6. Selbstvernetzende wäßrige Polymerdispersionen nach Anspruch 1, dadurch gekennzeichnet, daß der Polyester (A) durch Polykondensation aus (A1) zweiwertigen organischen Hydroxyverbindungen, (A2) zweibasigen organischen Säuren sowie (A6) organischen Verbindungen mit mindestens zwei funktionellen Gruppen ausgewählt aus Hydroxyl-, Carbonsäure-, Amino- und Mercaptogruppen und mindestens einer Sulfon- oder Phosphonsäuregruppe erhältlich sind.

7. Selbstvernetzende wäßrige Polymerdispersionen nach Anspruch 4, dadurch gekennzeichnet, daß die zur Herstellung der Polyester (A) verwendeten Edukte auch mindestens eines ausgewählt aus (A3) mindestens dreiwertigen organischen Hydroxyverbindungen, (A4) mindestens dreibasigen organischen Carbonsäuren und (A5) organischen Hydroxycarbonsäuren enthalten.

8. Selbstvernetzende wäßrige Polymerdispersionen nach Anspruch 4, dadurch gekennzeichnet, daß bis zu 80 % der Stoffmenge der Verbindungen (A1) durch organische Diamine (A7) und/oder durch organische Hydroxyamine mit einer primären oder sekundären Aminogruppe und einer Hydroxylgruppe ersetzt sind.

9. Selbstvernetzende wäßrige Polymerdispersionen nach Anspruch 4, dadurch gekennzeichnet, daß ein Massenanteil von 1 bis 20 % der Dihydroxyverbindungen (A1) durch drei- oder mehrwertige Hydroxyverbindungen (A3) ersetzt ist.

10. Selbstvernetzende wäßrige Polymerdispersionen nach Anspruch 4, dadurch gekennzeichnet, daß ein Massenanteil von 1 bis 20 % der Dicarbonsäuren (A2) durch drei- oder mehrbasige Carbonsäuren (A4) ersetzt ist.

11. Selbstvernetzende wäßrige Polymerdispersionen nach Anspruch 1, dadurch gekennzeichnet, daß die Vinylpolymeren (B) durch radikalisch initiierte Emulsionspolymerisation in einer wäßrigen Lösung oder Dispersion der Polyester (A) hergestellt werden, die gegebenenfalls teilweise oder vollständig neutralisiert sind.

12. Selbstvernetzende wäßrige Polymerdispersionen nach Anspruch 1, dadurch gekennzeichnet, daß die Vinylpolymere (B) wiederholende Einheiten (B1) abgeleitet von Styrol aufweisen.

13. Selbstvernetzende wäßrige Polymerdispersionen nach Anspruch 1, dadurch gekennzeichnet, daß die Vinylpolymere (B) wiederholende Einheiten (B2) aufweisen abgeleitet von einer oder mehreren Verbindungen ausgewählt aus Hydroxyäthylacrylat, Hydroxyäthylmethacrylat, Hydroxypropylacrylat und Hydroxypropylmethacrylat.

14. Selbstvernetzende wäßrige Polymerdispersionen nach Anspruch 1, dadurch gekennzeichnet, daß die Vinylpolymere (B) wiederholende Einheiten (B31) aufweisen abgeleitet von einer oder mehreren Verbindungen ausgewählt aus Diacetonacrylamid, Vinylacetoacetat, Vinylpyruvat, Acrolein, Methacrolein und Crotonaldehyd.

15. Selbstvernetzende wäßrige Polymerdispersionen nach Anspruch 1, dadurch gekennzeichnet, daß die Vinylpolymere (B) wiederholende Einheiten (B32) aufweisen abgeleitet von einer oder mehreren Verbindungen ausgewählt aus Aminoäthylacrylamid und aminosubstituierten (Meth)acrylestern und (Meth)Acrylamiden abgeleitet von aliphatischen Alkoholen bzw. primären aliphatischen Aminen mit 1 bis 8 Kohlenstoffatomen.

16. Selbstvernetzende wäßrige Polymerdispersionen nach Anspruch 1, dadurch gekennzeichnet, daß die Vinylpolymere (B) wiederholende Einheiten (B4) aufweisen abgeleitet von einer oder mehreren Verbindungen ausgewählt aus Methyl(meth)acrylat, Äthyl(meth)acrylat, 2-Äthylhexyl(meth)acrylat, Dimethylmaleat und Diäthylmaleat.

17. Selbstvernetzende wäßrige Polymerdispersionen nach Anspruch 1, dadurch gekennzeichnet, daß die Vinylpolymere (B) wiederholende Einheiten (B5) aufweisen abgeleitet von einer oder mehreren Verbindungen ausgewählt aus Vinylacetat, Vinylpropionat, Vinylversatat-5 und -10, Vinylchlorid und (Meth)Acrylnitril.

18. Selbstvernetzende wäßrige Polymerdispersionen nach Anspruch 1, dadurch gekennzeichnet, daß als Monomere (B3) solche mit Carbonylgruppen eingesetzt werden und die Vernetzungsmittel (C) ausgewählt sind aus Hydrazin, Bernsteinsäure-, Glutarsäure- und Adipinsäure-bishydrazid.

19. Selbstvernetzende wäßrige Polymerdispersionen nach Anspruch 1, dadurch gekennzeichnet, daß die Vinylpolymeren (B) wiederholende Einheiten mit Amino- oder Hydrazinfunktion enthalten und die Vernetzungsmittel (C) ausgewählt sind aus Glyoxal, Malondialdehyd, Acetylaceton und Acetonylaceton.

20. Selbstvernetzende wäßrige aminfreie Polymerdispersionen nach Anspruch 6, dadurch gekennzeichnet, daß zur Synthese, des Polyesters A die Verbindungen (A6) in Form ihrer Alkali-, Erdalkali- oder Ammoniumsalze eingesetzt werden, und daß auf eine Neutralisation durch Aminzusatz verzichtet wird.

21. Verfahren zur Herstellung von selbstvernetzenden wäßrige Polymerdispersionen nach Anspruch 1, dadurch gekennzeichnet, daß eine Mischung von Vinylmonomeren ausgewählt aus den Monomeren (B1) bis (B5) in einer wäßrigen Lösung oder Dispersion eines Polyesters (A) in Gegenwart von radikalischen Initiatoren polymerisiert wird.

22. Verfahren nach Anspruch 21, dadurch gekennzeichnet, daß der Polyester (A) nach der Kondensation in einem Lösungsmittel ausgewählt aus N-Methylpyrrolidon, Butylglykol und Methoxypropanol und Mischungen aus diesen aufgenommen wird und anschließend in Wasser dispergiert wird, sodann ein Teil oder die gesamte Menge an Initiator und ein Teil oder die gesamte Menge an Monomeren zugefügt wird und die Polymerisation ausgelöst wird, wobei gegebenenfalls die restlichen Mengen an Initiator und Monomeren während der Polymerisation nachdosiert werden.

23. Verwendung der selbstvernetzenden wäßrigen Polymerdispersionen nach Anspruch 1 zur Herstellung von Bindemitteln für Beschichtungsmittel.
